# EUROPEAN PATENT APPLICATION

(11) **EP 4 797 145 A1**
(43) Date of publication of application: **26.08.2026**
(21) Application number: 24893786.4
(22) Date of filing: 28.06.2024
(51) Int. Cl.: G06F 30/23, B21D 22/00, B21D 22/26, G06F 30/10, G06F 113/22

(54) **METHOD FOR DESIGNING PREFORMING SHAPE, METHOD FOR MANUFACTURING PRESS-MOLDED ARTICLE, AND PROGRAM**

(30) Priority: 22.11.2023 JP 2023197994
(71) Applicant: JFE Steel Corporation, Tokyo 100-0011 (JP)
(72) Inventor: NAKAGAWA Kinya, Tokyo 100-0011 (JP); SHINMIYA Toyohisa, Tokyo 100-0011 (JP)
(74) Representative: Hoffmann Eitle
(86) International application number: PCT/JP2024/023505
(87) International publication number: WO 2025/109791

(57) **Abstract**

There is provided a technology capable of more simply designing a preforming shape. A method includes designing a preforming shape of an intermediate part. The method includes a position identification process (20) of identifying a crack occurrence position where a crack is presumed to occur in a formed press-formed article when a metal sheet is press-formed to the bottom dead center with a die capable of forming the metal sheet into a target shape by one press-forming, a first surface area calculation process (21) of determining a surface area (A1) positioned within a first region within a predetermined distance (L0) from the crack occurrence position in the target shape, a basic shape setting process (22) of setting a basic shape of the preforming shape based on the target shape, a second surface area calculation process (23) of determining a surface area (A2) positioned within a second region within the distance (L0) from a position corresponding to the crack occurrence position in the basic shape, and a basic shape transformation process (24) of transforming the shape of the basic shape to satisfy Equation (1) below. $0.9 \times A 1 < A 2 < 1.1 \times A 1$

## Description

### Technical Field

The present invention relates to a technology to realize the manufacture of difficult-to-form parts and the like. The difficult-to-form parts are press-formed articles having a possibility that a crack occurs when a target shape is formed by one press-forming. The present invention particularly relates to a technology related to design of a preforming shape which is the shape of an intermediate part for realizing the forming of the difficult-to-form parts. The present invention also relates to a method for manufacturing a press-formed article using the design technology of the preforming shape.

### Background Art

From the viewpoint of improving the collision safety and improving the fuel consumption, for example, of vehicles, the performance required in automobile parts includes light weight, high strength, high rigidity, and the like. To improve the performance, the complication of the part shape has been demanded. There is also a demand for higher strength of materials to be used. Therefore, automobile parts tend to be the difficult-to-form parts. As a result, there is a problem that manufacturing the automobile parts by press-forming sometimes becomes difficult.

To solve the above-described problem, various press-forming methods, such as those described in PTLS 1 and 2, have been developed. PTL 1 discloses the technique of improving formability by dividing processes and optimizing the shape of each process to form a target shape. PTL 2 is targeted to a deep drawn square cup shape. PTL 2 discloses the technique of improving formability by optimizing the shape of each process or a blank shape.

### Citation List

### Patent Literatures

PTL 1: JP 5867657 B
PTL 2: JP 7070820 B

### Summary of Invention

### Technical Problem

Herein, a problem frequently occurring when parts of complex shapes are manufactured by press-forming or when high-strength materials are press-formed to manufacture products is a crack in forming. The crack occurs due to localized strain concentration to a material. Therefore, to suppress the crack occurrence, it is effective to suppress the strain concentration.

Therefore, in the methods described in PTLS 1 and 2, a press work process is divided into two or more processes. Then, in the methods described in PTLS 1 and 2, forming into an optimum intermediate part shape is performed in a process before the final process. PTLS 1 and 2 disclose the technologies of effectively dispersing strain and improving formability by the above-described methods.

In the disclosed technologies, the line length in a specific cross-section is compared between preforming and main forming. Then, the design is performed based on the comparison. However, the position, the direction, and the number of the cross-sections are optional. Therefore, there is a risk that a formability improvement effect significantly varies depending on how and how many cross sections are taken. Preforming shapes having the same cross-section line length and different cross-sectional shapes can be infinitely designed. Therefore, repeated calculations are required to determine the optimum shape from among the preforming shapes. Further, at that time, the preforming shape is required to design over substantially the entire part shape for each calculation. Therefore, in the past, there has been a problem that the design of the preforming shape requires a large amount cost in terms of time.

The present invention has been made focusing on the above-described point. It is an object of the present invention to provide a technology capable of more simply designing the preforming shape and a technology related to the manufacture of a press-formed article using the design of the preforming shape.

### Solution to Problem

The present inventors have investigated a preforming shape design technique to solve the above-described problem. Then, the present inventors have obtained the following findings.
(1) When a target shape is press-formed, there is no need to design the preforming shape for parts where no cracks occur. Based on this idea, the design of the preforming shape may be considered in only limited regions, such as a region where cracks are likely to occur and the surroundings of the region.
(2) When the cross-section line length is compared, the results are affected by how the cross-section is taken. However, when the interval for taking the cross-section is infinitely reduced, the sum of the cross-section line lengths becomes equal to the surface area or can be approximated to the surface area. The surface area is given the same value irrespective of who calculates it, once a region where it is calculated is determined.
(3) For a region where a crack is anticipated to occur, a surface area required in preforming is gained. This relieves the strain concentration of a material occurring in main forming, and can suppress a crack.

The feature of the findings above is that, once a region where the preforming shape is designed and a method for matching the surface area are determined, unique determination is performed after that. Therefore, the feature of the findings above is that the same results are obtained irrespective of who designs it. Therefore, the feature of the findings above is that, for example, once a program for the design of the preforming shape is created, automatic design of the preforming shape is enabled.

To solve the problem, one aspect of the present invention is a method for designing a preforming shape when a press-formed article of a target shape is manufactured by press work including a preforming process of press-forming a metal sheet into the preforming shape and a main forming process of press-forming an intermediate part of the preforming shape into the target shape, including:
a position identification process of identifying a crack occurrence position where a crack is presumed to occur in a formed press-formed article when the metal sheet is press-formed to the bottom dead center with a die capable of forming the metal sheet into the target shape by one press-forming;
a first surface area calculation process of determining a surface area A1 positioned within a first region within a predetermined distance L0 from the crack occurrence position in the target shape;
a basic shape setting process of setting a basic shape of the preforming shape based on the target shape;
a second surface area calculation process of determining a surface area A2 positioned within a second region within the distance L0 from a position corresponding to the crack occurrence position in the basic shape; and
a basic shape transformation process of transforming the shape of the basic shape to satisfy Equation (1) below. $0.9 \times A 1 < A 2 < 1.1 \times A 1$

The first region and the second region are regions having the same shape and the same size.

### Advantageous Effects of Invention

The aspect of the present invention makes it possible to more simply design a preforming shape. As a result, the aspect of the present invention makes it possible to more easily manufacture a press-formed article.

### Brief Description of Drawings

FIG. 1 is a view illustrating an example of the flow of manufacturing a press-formed article according to an embodiment based on the present invention;
FIG. 2 is a view illustrating an example of the processing configuration of design of a preforming shape according to the embodiment based on the present invention;
FIGS. 3A to 3G are conceptual views illustrating the transition of the design of the preforming shape according to the embodiment based on the present invention;
FIGS. 4A to 4D are views illustrating a second shape setting process;
FIGS. 5A and 5B are views illustrating the second shape setting process;
FIG. 6 is a view illustrating the relation between the sides single shapes, dividing lines 42, and a target shape 41 viewed in plan view;
FIG. 7 is a view illustrating changes in surfaces within a second region;
FIGS. 8A to 8C are examples illustrating an example of a function f(L);
FIG. 9 is a view illustrating a configuration example of a program;
FIG. 10 is a view illustrating an example of the processing configuration of design of a preforming shape according to the embodiment based on the present invention;
FIG. 11 is a view illustrating a configuration example of a program;
FIG. 12 is a view illustrating a target shape and crack positions in Examples;
FIG. 13 is a view illustrating a basic shape in Examples;
FIG. 14 is a view illustrating a preforming shape in Examples; and
FIG. 15 is a view illustrating a press-formed article in Examples.

### Description of Embodiments

Next, embodiments of the present invention are described with reference to the drawings.

Press work is considered in which a metal sheet is press-formed to the bottom dead center by one press-forming with a die capable of forming the metal sheet into a target shape. A crack is sometimes presumed to occur in a formed press-formed article by the press work. This embodiment is a technology assuming such a case. The die capable of press-forming a metal sheet into a press-formed article of a target shape is a die having a surface which is the same as or approximated to the target shape as the forming surface, for example.

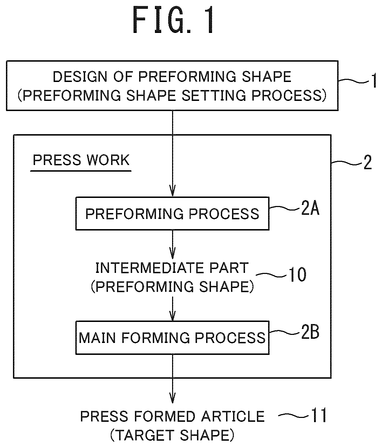

In this embodiment, press work 2 is used which includes a preforming process 2A and a main forming process 2B as illustrated in FIG. 1. This embodiment describes a technology for manufacturing a press-formed article 11 of a target shape by the press work 2. The preforming process 2A is a process of press-forming a metal sheet into an intermediate part 10 of a preforming shape. The main forming process 2B is a process of press-forming the intermediate part 10 of the preforming shape into a press-formed article 11 of a target shape. The present disclosure is a technology particularly related to the design of the preforming shape in connection with the manufacture of the press-formed article.

### [First embodiment]

### (Method for designing preforming shape)

The design of the preforming shape of the first embodiment includes temporarily setting a basic shape of the preforming shape which is the shape of the intermediate part 10. Then, a partial region of the temporarily set basic shape is changed as a design region. Thus, the design of the preforming shape of the first embodiment includes designing the preforming shape. In this embodiment, only the design region may be changed after the basic shape is temporarily set. However, the present invention also includes changing the shapes of the other regions in connection with the change in the shape of the design region. The design region is a crack occurrence region and an outer peripheral region of the region. The outer peripheral region is a portion affecting a crack, for example.

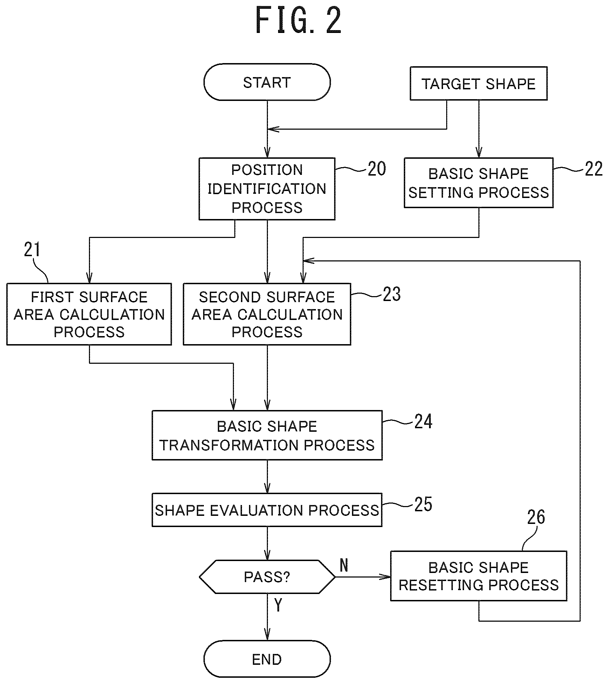

A method for designing a preforming shape of this embodiment includes a position identification process 20, a first surface area calculation process 21, a basic shape setting process 22, a second surface area calculation process 23, a basic shape transformation process 24, and a shape evaluation process 25 as illustrated in FIG. 2. Further, the method for designing a preforming shape of this embodiment includes a basic shape resetting process 26 as illustrated in FIG. 2. It should be noted that which of processing of the first surface area calculation process 21 and processing of the basic shape setting process 22 may be carried out first. The processing of the first surface area calculation process 21 and the processing of the basic shape setting process 22 may be performed at the same time.

For the design of the preforming shape of this embodiment, processing is performed according to the procedure described below. As described below, this processing can be carried out by a known forming analysis technique. The known forming analysis technique may be a forming analysis technique by CAE using a computer. More specifically, processing of the method for designing a preforming shape of this embodiment can be configured as a program to be executed by a computer.

### <Position identification process 20>

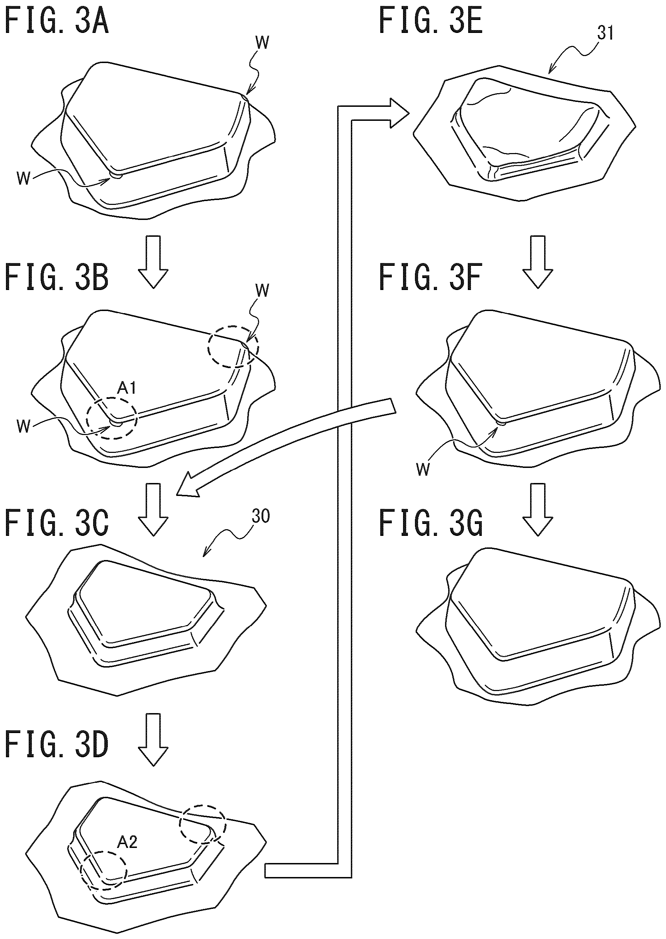

The position identification process 20 assumes a case where a metal sheet is press-formed to the bottom dead center with a die capable of forming the metal sheet into a target shape by one press-forming. Then, the position identification process 20 performs processing of identifying crack occurrence positions W where cracks are presumed to occur in the formed press-formed article based on the assumption (see FIG. 3A).

In the position identification process 20 of this embodiment, a forming analysis of forming a metal sheet into a target shape is performed by a finite element analysis using CAE. Then, the position identification process 20 identifies a region where a crack occurs from the analysis result.

In this process, the identification of the crack occurrence position W can be automatically determined using conventional general findings when the target shape and the material properties and the material fracture limit curves of the target metal sheet are known in advance. The crack occurrence position W may be identified by carrying out actual press-forming.

Herein, the detected crack occurrence position W is not limited to one place. As illustrated in FIG. 3A, a plurality of such crack occurrence positions W is sometimes present. In this case, the processing of the first surface area calculation process 21 and the processing of the second surface area calculation process 23 and processing of the basic shape transformation process 24 in connection therewith described below may be carried out for each crack occurrence position W.

The description of the processing below is basically a description when the processing is carried out individually and correspondingly for each crack occurrence position W.

### <First surface area calculation process 21>

The first surface area calculation process 21 performs processing of determining a surface area A1 based on the crack occurrence position W determined by the position identification process 20 (see FIG. 3B). The surface area A1 is a surface area positioned within the first region within a predetermined distance L0 from the crack occurrence position W in the target shape.

As the crack occurrence position W, a center position of a cracked place is used, for example. In this case, a region enclosed by a sphere having a radius L0 with the center position of the cracked place as the center is the first region. The same applies to a second region described later. The first region and the second region are regions having the same size, for example.

It may be acceptable that the crack occurrence position W is set as an area having a predetermined size, and a position away from the outer peripheral contour position of the area by a predetermined distance is the outer edge of the first region. However, the above-described method is simpler.

In the first surface area calculation process 21 of this embodiment, the sum of the surface areas (surface area A1) of meshes present within the first region among meshes representing the target shape (press-forming shape) is calculated from forming analysis information. This process can be automatically performed with the result of the position identification process 20 when the distance L0 is determined in advance. The area of each mesh can be determined by Heron's formula or the like from coordinate information of nodes constituting the mesh, for example. However, the area of the mesh may be determined using the other methods.

### [Distance L0]

The distance L0 is set as follows. For example, the distance L0 is set to such a size that a crack region and the entire outer peripheral part thereof are included within the first region defined by the distance L0. The setting may be performed based on experiments, past experiences, or the like, for example.

The distance L0 (mm) may be set to satisfy Equation (3) below when the tensile strength of a metal sheet to be worked is set as TS (MPa), for example. $0 . 5 \times \left({TS}^{0.5}\right) \leq L 0 \left(mm\right) \leq 3 \times \left({TS}^{0.5}\right)$

Herein, when the outer edge of the first region defined by the distance L0 is basically designed at a position near the crack occurrence region, the crack suppression effect is high. However, when the distance L0 is less than 0.5 × (TS^0.5), there is a risk that the defined region becomes excessively narrow. In this case, there is a risk that a preforming shape, which is designed to match the surface area, becomes excessively steep, making it difficult to form the preforming shape. On the other hand, when the distance L0 exceeds 3 × (TS^0.5), the first region defined by the distance L0 becomes excessively large, reducing the cracking suppression effect.

In Equation (3), the tensile strength TS is included in the definition of the distance L0 for the following reasons. More specifically, ultra-high strength materials are generally more prone to strain concentration and crack occurrence than mild steel. Therefore, when the tensile strength is higher, the preforming is required to perform in a wider range to disperse strain. Further, when the preforming shape becomes excessively steep, the preforming shape cannot be sufficiently formed into a target shape in the main forming process 2B, so that a gall is likely to be left.

### <Basic shape setting process 22>

The basic shape setting process 22 performs processing of setting a basic shape 30 serving as the basis for the preforming shape, which is the shape of the intermediate part 10, based on the target shape (see FIG. 3C). The basic shape 30 is preferably set to a shape close to the target shape as a whole.

Examples of the basic shape setting process 22 include a first shape setting process and a second shape setting process described below. However, cases in which the basic shape 30 is determined by other known methods for determining the preforming shape also fall within the scope of the present disclosure. However, the basic shape 30 of the preforming shape is preferably set by simple processing.

### [First shape setting process]

The first shape setting process sets one forming shape selected from among a plurality of forming shapes before the cracks occur as the basic shape 30 of the preforming shape. Each of the plurality of forming shapes is a shape selected from among forming shapes during the formation of the metal sheet to the forming bottom dead center with a die capable of forming the metal sheet into the target shape.

The first shape setting process of this embodiment sets the basic shape 30 of the preforming shape in the forming analysis in the position identification process 20. At this time, the shape in a forming stage before a crack occurs is set as the basic shape 30 of the preforming shape.

At this time, there is a possibility that the strain concentration has already started in the forming shape immediately before a crack occurs. Therefore, a forming shape in a state in which the forming depth is smaller by 2 mm or more than a forming depth at which the crack occurs is desirably set as the basic shape 30. Herein, the minimum forming depth is 0 mm. More specifically, the present disclosure also includes the setting the metal sheet shape before forming as the basic shape 30.

### [Second shape setting process]

The second shape setting process sets the basic shape 30 by the following first process to fifth process.

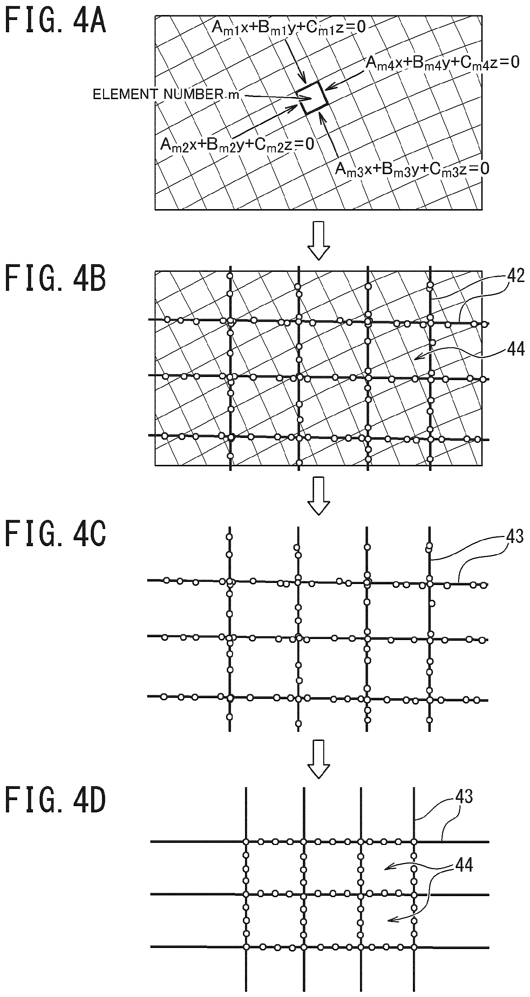

Herein, the shape of the metal sheet is represented by a set of a plurality of elements over the period from before the forming through during the forming. In the shape, the plurality of elements is represented by meshes, for example (see FIG. 4A). FIG. 4A illustrates a state in which the sides of all the elements are formulated into equations, and Amm, Bmm, and Cmm are calculated for all the elements.

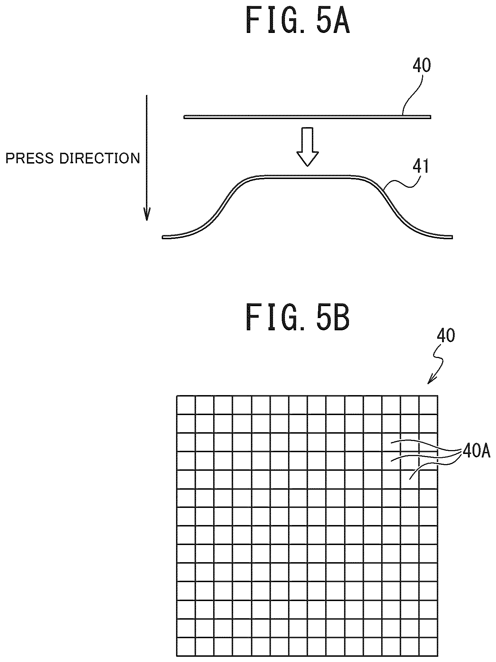

First, a first setting process assumes a reference plane 40, which is a plane orthogonal to the press direction in the main forming process 2B (see FIG. 5A). Then, single shapes 40A formed of a polygonal shape are arranged to be consecutively aligned with respect to the reference plane 40. This sets the reference plane 40 as a plane partitioned by the repetition of a plurality of such single shapes 40A (see FIG. 5B).

The plurality of single shapes 40A is preferably two-dimensionally arranged such that the plurality of single shapes 40A is consecutively linearly aligned in the same direction.

FIG. 5B is an example when the single shape 40A is set as a quadrilateral shape. The quadrilateral may be either a rectangular shape or a rhombus shape. For example, the plurality of single shapes 40A may be arranged on the reference plane 40 by partitioning the reference plane 40 by lattice-like lines. In this case, the reference plane 40 can be simply partitioned by the plurality of single shapes 40A by merely partitioning the reference plane 40 into a lattice shape. More specifically, the reference plane 40 containing the plurality of single shapes 40A can be simply and easily defined.

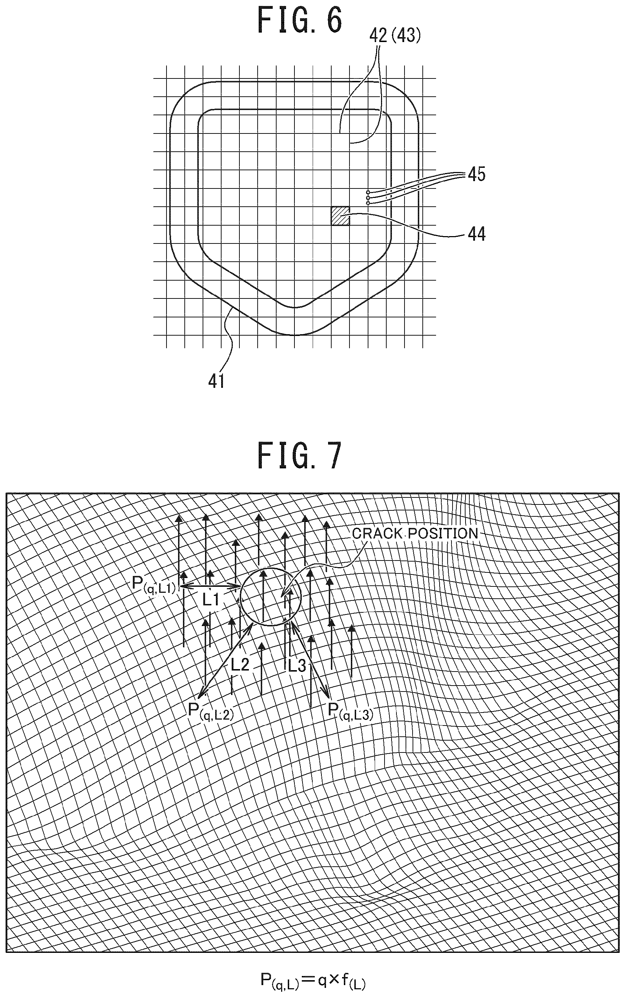

Examples of the single shape include, in addition to the quadrilateral shape, a triangular shape, a hexagonal shape, and the like. However, the arrangement is preferable in which the sides of the plurality of single shapes 40A adjacent to each other aligned in a two-dimensional direction are linearly consecutive along the extension direction of the sides (see FIG. 5B and FIG. 6).

Next, the reference plane 40 is assumed which is partitioned by the plurality of single shapes 40A and contains the plurality of single shapes 40A. A state is assumed in which the reference plane 40 is moved in the press direction toward the target shape 41 and intersects the target shape 41. More specifically, a state is assumed in which the sides of the single shapes 40A arranged on the reference plane 40 intersect the target shape 41. Then, a second setting process performs processing of dividing a surface of the target shape by dividing lines 42 formed on the surface of the target shape 41 by the intersection (see FIG. 6). FIG. 4B illustrates an example of the relation between the dividing lines 42 and the meshes.

Next, a third setting process arranges three or more nodes 45 on each of the dividing lines 42 corresponding to each side of each single shape 40A. The three or more nodes 45 are arranged at a distance from each other. A plurality of such nodes 45 is arranged at equal intervals as viewed from the press direction, for example.

Next, a fourth setting process sets a plurality of smooth curves 43 by connecting the plurality of nodes 45 aligned along the extension direction of the dividing lines 42 (see FIG. 4C). As illustrated in FIG. 6, a case where they are viewed from the press direction (e.g., above) is considered. In this case, the dividing lines 42 connecting the sides of the single shapes 40A and the smooth curves 43 with the dividing lines as the reference have the same linear shape. However, when the curve 43 is viewed from the side orthogonal to the press direction, the curve 43 is a smooth curve and has a curve shape with no corners. On the other hand, the dividing lines 42 contain lines connecting the sides of the single shapes 40A. Therefore, there is a risk that, when the dividing line 42 is viewed from the side orthogonal to the press direction, the dividing line 42 partially has a corner. Further, there is a risk that the dividing line 42 has a portion with a curvature sharper than that of the curve 43.

Next, a fifth setting process forms a surface shape by smoothly patching a surface to each region 44 (see FIG. 6) enclosed by the set plurality of curves 43. The surface shape is set as the basic shape 30 (see FIG. 4D). The connection between the surfaces patched to the regions 44 is preferably smooth connection.

Herein, a crack of a press-formed article occurs by concentration of transformation in a part where the shape is sharply transformed. The basic shape 30 designed by the method of this second shape setting process is a shape approximately close to the target shape. However, the surface shape of each place is a moderately gentle shape, so that the basic shape 30 is an easy-to-form shape. This shape is set as the basic shape 30 of the preforming shape, and the preforming shape is designed in the following process.

The main forming may be performed with the shape designed in this process as the preforming shape. When no cracks occur as a result, the design of the preforming shape is ended in this process.

Herein, the interval between the dividing lines 42 adjacent to each other is preferably set to 1/10 or less of the line length of the target shape. The line length of the target shape is set as the line length in the arrangement direction of the dividing lines 42 adjacent to each other.

### <Second surface area calculation process 23>

The second surface area calculation process 23 performs processing of determining a surface area A2 based on the crack occurrence positions W determined by the position identification process 20 (see FIG. 3D). The surface area A2 is a surface area positioned within the second region within the distance L0 from a position corresponding to the crack occurrence position W in the basic shape 30.

The second surface area calculation process 23 of this embodiment defines the basic shape 30 determined in the basic shape setting process 22 with meshes based on a known forming analysis. Then, the sum of the surface areas (surface area A2) of the meshes present within the second region is calculated. A mesh condition may be set to the same condition as a mesh condition defining the target shape, for example.

For the determination within the second region of this process, there is a method for determining a region containing elements with the same element numbers as those of the elements contained in the first region determined in the first surface area calculation process 21, for example. In the case of an analysis method in which the element number changes during forming, a mark is given to the outer edge of the first region on analysis software. A method is considered which includes returning the forming analysis to a shape serving as the basis for the preforming shape, and determining a region enclosed by the mark, for example. However, any method may be acceptable.

### <Basic shape transformation process 24>

Herein, the region in the basic shape 30 present within the second region becomes a design region of the preforming shape with respect to the basic shape 30. Then, the basic shape transformation process 24 performs processing of transforming the second region in the basic shape 30 and changing the surface area within the second region such that the cracks do not occur in the main forming process 2B. Thus, a shape 31 obtained by transforming the basic shape 30 is designed as a candidate for the preforming shape (see FIG. 3E).

The basic shape transformation process 24 of this embodiment performs processing of transforming the shape of the basic shape 30 to satisfy Equation (1). $0.9 \times A 1 < A 2 < 1.1 \times A 1$

As described above, A1 indicates the surface area present within the first region in the target shape 41. A2 indicates the surface area present within the second region in the basic shape 30.

Herein, when the surface area A2 is excessively small, there is a risk that the preforming effect is not exhibited, so that a crack occurs. When the surface area A2 is excessively large, there is a risk that a crack occurs in preforming. Further, when the surface area A2 is excessively large, there is a possibility that an excess of the material remains in the main forming, so that wrinkles are generated even when no cracks occur in preforming. From such a reason, it is more desirable to establish "0.95 × A1 < A2 < 1.05 × A1".

The basic shape transformation process 24 vertically (press direction or sheet thickness direction) moves the nodes of the meshes within the second region as illustrated in FIG. 7, for example. This adjusts the surface area A2 of the basic shape present within the second region. At this time, the amount of movement (amount of vertical displacement) is adjusted according to the distance from the crack occurrence position W. Further, adjustment is made such that the region to be changed within the second region and the region of the outer periphery of the second region are smoothly connected.

The basic shape transformation process 24 performs such an adjustment based on an equation, such as Equation (2) below, for example. By setting Equation (2), the processing of the basic shape transformation process 24 can be further automated. The surface shape within the second region is changed to a surface shape represented by Equation (2), for example. $P \left(q, L\right) = q \times f \left(L\right)$

The function f(L) represents a smooth curve. The function f(L) is a function formula satisfying f(L0) = 0, f'(0) = 0, and f'(L0) = 0.

L is the shortest distance from a position corresponding to the crack occurrence position W. The shortest distance from the crack occurrence position W to a boundary part of the second region is L0.

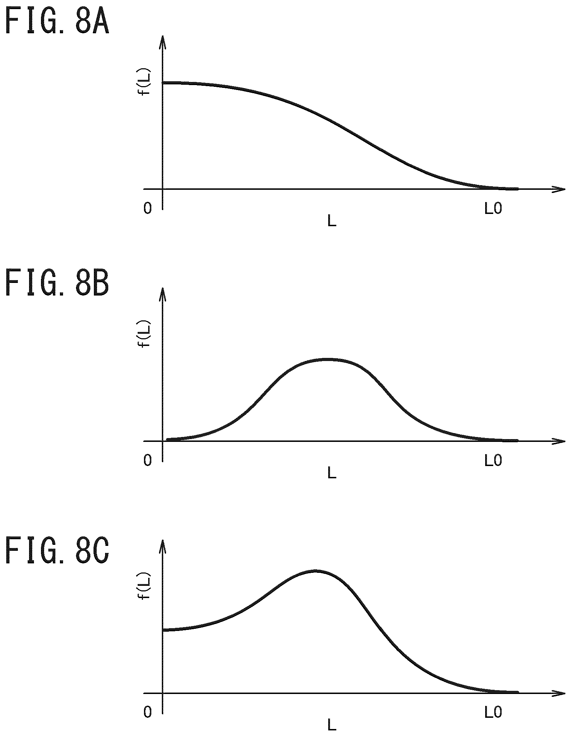

One example of the function f(L) is illustrated in FIGS. 8A to 8C.

The value of q is adjusted with q as a variable. Thus, the surface area A2 of a portion positioned within the second region in the basic shape 30 is determined to satisfy Equation (1).

An example of Equation (2) is described below. $P \left(q, L\right) = q \times \left(-\left(cos\left(2π\times L/L0\right)-1\right)/2\right)$

In this example, f(L) is set to "(- (cos(2π × L/L0) - 1)/2)".

Next, the second region is considered where the shape of the basic shape 30 serving as the basis for preforming is designed of a finite element analysis model. To the z coordinates of all the nodes within the second region, the number represented by P(q, L) corresponding to L of each node is added. The surface area A2 is calculated by such processing. At this time, a method is considered which includes adjusting the basic shape 30 by carrying out calculations while the value of q is increased or reduced until Equation (1) is satisfied.

The reason why a trigonometric function is used in Equation (2)' is as follows. More specifically, the differential value of Equation (2)' becomes 0 at the positions of L = 0 and L = L0, and P(L) becomes 0 at the position of L = L0. When the above-described conditions are not satisfied, the connection between the second region where a shape design is performed and the outside of the second region becomes discontinuous. As a result, the realization as a die shape (forming surface shape) becomes difficult. However, insofar as the above-described conditions are satisfied, f(L) may be a combination of the trigonometric functions or another equation, such as a polynomial function, for example.

### <Shape evaluation process 25>

The shape evaluation process 25 first sets the basic shape 30 determined in the basic shape transformation process 24 as the preforming shape. Then, a forming analysis simulating the preforming process 2A and the main forming process 2B is performed using the preforming shape and the target shape (see FIG. 3F).

Then, the shape evaluation process 25 determines whether a crack occurs by the forming analysis.

When it has been determined by the forming analysis that no cracks occur, the processing of the design is ended (see FIG. 3G).

When it has been determined that a crack occurs, the process proceeds to the basic shape resetting process 26. Then, the basic shape 30 is changed, and the processing of the second surface area calculation process 23 and the processing of the basic shape transformation process 24 are repeatedly carried out until the crack stops.

Even when a crack has occurred, it is possible to end the design at any point of time when it is determined that the crack can be avoided by a minor correction of the preforming shape using other means.

### <Basic shape resetting process 26>

When a crack has occurred in the main forming process 2B, the basic shape resetting process 26 updates the basic shape 30 after change determined in the basic shape transformation process 24 to the new basic shape 30. Corresponding places subjected to the processing of the second surface area calculation process 23 and the processing of the basic shape transformation process 24 are only places where a crack has occurred in the shape evaluation process 25.

When a crack occurrence place has been changed, the first surface area calculation process 21 is also carried out again with the shape evaluation process 25 as the processing of the position identification process 20. A configuration may be acceptable in which the first surface area calculation process 21 is also carried out again with the processing of the shape evaluation process 25 as the processing of the position identification process 20, irrespective of whether the crack occurrence place has been changed.

When it is determined that a crack has occurred in the preforming process 2A, the basic shape resetting process 26 increases the safety margin for cracks as compared with that of the previous time. Then, the same processing as that of the basic shape setting process 22 is carried out to reset the basic shape 30. In the case of the first shape setting process, the increasing the safety margin is achieved by further reducing the forming depth, for example.

### (Program)

Herein, the processing above is desirably automatically performed using a computer. When Equation (2) and the distance L0 are determined, the other conditions can be mechanically determined. Therefore, the calculations of the design of the preforming shape can be automatically processed using a computer. In this case, a further enhancement of efficiency can be achieved. More specifically, the processing of the design of this embodiment is configured as a program. A configuration may be acceptable in which the program is stored in a storage unit and executed by a computer.

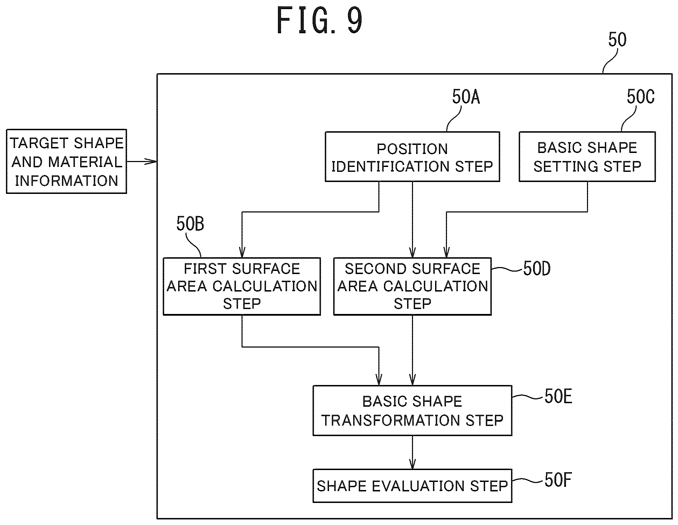

For example, a program 50 to be executed by a computer may be configured to include a position identification step 50A, a first surface area calculation step 50B, a basic shape setting step 50C, a second surface area calculation step 50D, a basic shape transformation step 50E, and a shape evaluation step 50F as illustrated in FIG. 9.

The position identification step 50A performs a forming analysis to the forming bottom dead center under an analysis condition in which a metal sheet is press-formed into a target shape by one press-forming. Thus, the processing of identifying a position where a crack occurs is carried out.

The first surface area calculation step 50B carries out processing of determining the surface area A1 positioned within the region within the set distance L0 from the crack occurrence position identified in the position identification step 50A in the target shape.

The basic shape setting step 50C carries out processing of temporarily setting the basic shape 30 of the preforming shape based on the target shape.

The second surface area calculation step 50D carries out processing of determining the surface area A2 positioned within the second region in the basic shape 30. The second region is a region within the distance L0 from a position corresponding to the crack occurrence position identified in the position identification step 50A.

The basic shape transformation step 50E performs processing of transforming at least the shape within the second region in the basic shape 30 such that the shape within the second region in the basic shape 30 satisfies 0.9 × A1 < A2 < 1.1 × A1.

At this time, when only the shape within the second region is transformed, it is preferable to set a condition that the shape within the second region is transformed such that the transformation is zero and a connection with the outside of the second region is smooth at a position of an outer peripheral part of the second region.

The shape evaluation step 50F carries out a forming analysis of performing the forming of the preforming shape and the main forming with the basic shape 30 after change determined in the basic shape transformation step 50E as the preforming shape. Then, it is evaluated whether a crack occurs. When it has been determined that no cracks occur, the process is ended. When it has been determined that a crack occurs, the basic shape 30 after change determined in the basic shape transformation step 50E is changed to the basic shape 30. Then, the process returns to the first surface area calculation step 50B, and the subsequent steps are repeatedly carried out until the cracks are resolved.

The program containing the steps above can be created by a known forming analysis technique by CAE using a computer. Examples of inputs of the program include the target shape and the material properties and the material fracture limit curves of a target metal sheet, for example.

The program may also be configured to execute each processing described in the design of the preforming shape described above.

### (Method for manufacturing press-formed article)

A method for manufacturing a press-formed article of this embodiment includes a preforming shape design process 1, a preforming process 2A, and a main forming process 2B as illustrated in FIG. 1.

The preforming shape design process 1 determines a preforming shape by the method for designing a preforming shape described above.

The preforming process 2A press-forms a metal sheet into the determined preforming shape to manufacture the intermediate part 10. The main forming process 2B press-forms the intermediate part 10 of the preforming shape into a target shape.

By the processing above, the preforming shape can be designed by a simple method, and a press-formed article in which no cracks occur can be more surely manufactured.

### [Second embodiment]

### (Method for designing preforming shape)

A second embodiment is a forming method in which the preforming shape, which is the shape of the intermediate part 10, is directly determined.

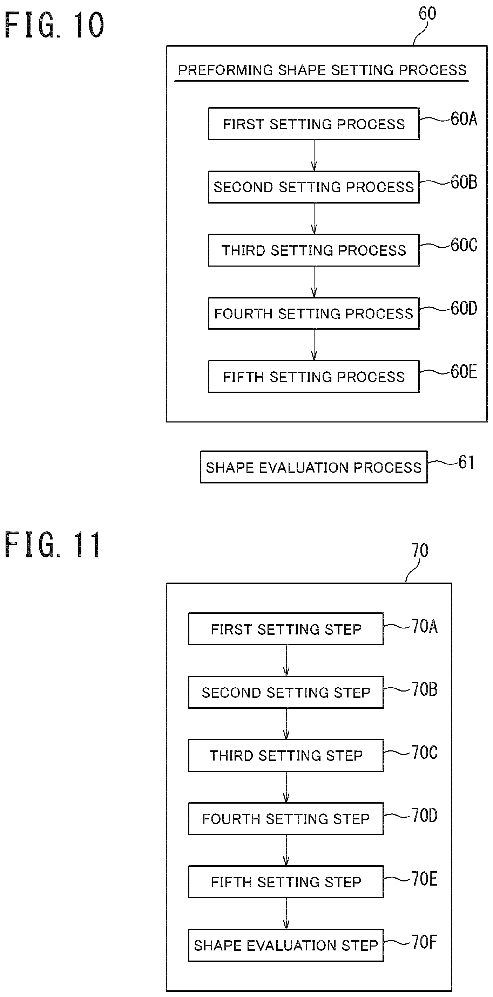

The design of the preforming shape of the second embodiment includes a preforming shape setting process 60 and a shape evaluation process 25 as illustrated in FIG. 10.

The preforming shape setting process 60 designs the preforming shape by the following processing from a first setting process 60A to a fifth setting process 60E.

First, the first setting process 60A assumes the reference plane 40 which is the plane orthogonal to the press direction in the main forming process 2B. Then, the single shapes 40A formed of a polygonal shape are arranged to be consecutively aligned with respect to the reference plane 40. This sets the reference plane 40 to a plane partitioned by the repetition of a plurality of such single shapes 40A.

At this time, the first setting process 60A preferably sets the single shape 40A as a quadrilateral shape, and arranges the plurality of single shapes 40A by partitioning the reference plane 40 by lattice-like lines. Then, the reference plane 40 is preferably partitioned by the plurality of single shapes 40A. In this case, the reference plane 40 containing the plurality of single shapes 40A can be simply and easily defined.

Next, the reference plane 40 is assumed which is partitioned by the plurality of single shapes 40A and contains the plurality of single shapes 40A. A state is assumed in which the reference plane 40 is moved in the press direction toward the target shape and intersects the target shape. More specifically, a state is assumed in which the sides of the single shapes 40A arranged on the reference plane 40 intersect the target shape. The second setting process 60B divides a surface of the target shape by the dividing line 42 formed on the surface of the target shape by the intersection state.

Next, the third setting process 60C arranges the three or more nodes on each of the dividing lines 42 corresponding to each side of each single shape 40A. The three or more nodes are arranged at equal intervals as viewed from the press direction, for example.

Next, the fourth setting process 60D sets a curve 43 by connecting the plurality of nodes aligned along the extension direction of the dividing lines 42. The curve 43 is set as a smooth curve without a sharp curvature part (corner). The plurality of curves 43 are set for each extension direction of each of the dividing lines 42.

Next, the fifth setting process 60E forms the surface shape by smoothly patching a surface to each region enclosed by the set plurality of curves 43. The surface shape is set as the preforming shape.

Herein, a crack of a press-formed article occurs by concentration of transformation in a part where the shape is sharply transformed. The preforming shape designed by the method of the second embodiment is a shape approximately close to the target shape. However, the preforming shape is easy to form because the shape of each place is a moderately gentle shape.

The interval between the dividing lines 42 adjacent to each other is preferably set to 1/10 or less of the line length of the target shape. The line length of the target shape is set as the line length in the arrangement direction of the dividing lines 42 adjacent to each other.

### <Shape evaluation process 61>

The shape evaluation process 61 performs a forming analysis simulating the preforming process 2A and the main forming process 2B using the preforming shape determined in the preforming shape setting process and the target shape. Then, the shape evaluation process 61 determines whether a crack occurs by the forming analysis.

When it has been determined that a crack occurs, the preforming shape is changed until the crack stops.

More specifically, when a crack has occurred in the preforming process 2A, the preforming shape setting process increases the safety margin for cracks as compared with that of the previous time, and carries out the processing. This resets the preforming shape.

Even when a crack has occurred, it is possible to end the design at any point of time when it is determined that the crack can be avoided by a minor correction of the preforming shape using other means.

### (Program)

Herein, the processing above is desirably automatically performed using a computer. When the reference plane 40 containing the plurality of single shapes 40A is determined, the other conditions can be mechanically determined. Therefore, a further enhancement of efficiency can be achieved by automatically performing the calculations by a computer. More specifically, a configuration may be acceptable in which the processing of the design of this embodiment is configured as a program, and the program is stored in a storage unit and executed by a computer.

For example, a program 70 to be executed by a computer is configured to include a first setting step 70A to a fifth setting step 70E as illustrated in FIG. 11.

First, the first setting step 70A assumes the reference plane 40 which is a plane orthogonal to the press direction in the main forming process 2B. Then, the single shapes 40A formed of a polygonal shape are arranged to be consecutively aligned with respect to the reference plane 40. This sets the reference plane 40 to a plane partitioned by the repetition of a plurality of such single shapes 40A.

At this time, the first setting step 70A preferably sets the single shape 40A as a quadrilateral shape. Then, the plurality of single shapes 40A is arranged by partitioning the reference plane 40 by lattice-like lines. Thus, the reference plane 40 is preferably partitioned by the plurality of single shapes 40A. In this case, the reference plane 40 containing the plurality of single shapes 40A can be simply and easily defined.

Next, the second setting step 70B assumes the reference plane 40 partitioned by the plurality of single shapes 40A and containing the plurality of single shapes 40A. A state is assumed in which the reference plane 40 is moved in the press direction toward the target shape and intersects the target shape. Then, the surface of the target shape is divided by the dividing lines 42 formed by the intersection of the sides of the single shapes 40A with the target shape.

Next, the third setting step 70C arranges the three or more nodes on each of the dividing lines 42 corresponding to each side of each single shape 40A. The three or more nodes are arranged at equal intervals as viewed from the press direction.

Next, the fourth setting step 70D connects the plurality of nodes aligned along the extension direction of the dividing lines 42. Thus, the plurality of smooth curves 43 is set.

Next, the fifth setting step 70E forms the surface shape by smoothly patching a surface to each region enclosed by the set plurality of curves 43. The surface shape is set as the preforming shape.

Next, the shape evaluation step 70F sets the preforming shape set in the fifth setting step 70E as the preforming shape. Then, a forming analysis of the preforming and the main forming is performed. When it has been determined that a crack occurs, the conditions are changed, and then the process proceeds to the second setting step 70B. Then, the second setting step 70B to the fifth setting step 70E are repeatedly carried out until the cracks are resolved.

The program containing the steps above can be created by a known forming analysis technique by CAE using a computer. Examples of inputs of the program include the target shape and the material properties of a target metal sheet, for example.

### (Method for manufacturing press-formed article)

A method for manufacturing a press-formed article of this embodiment includes the preforming shape design process 1, the preforming process 2A, and the main forming process 2B.

The preforming shape design process 1 determines the preforming shape by the method for designing a preforming shape described above.

The preforming process 2A press-forms a metal sheet into the determined preforming shape to manufacture the intermediate part 10. The main forming process 2B press-forms the intermediate part 10 of the preforming shape into a target shape.

By the processing above, the preforming shape can be designed by a simple method, and a press-formed article in which no cracks occur can be more surely manufactured.

### [Others]

The present disclosure can also take the following configurations.
(1) A method for designing a preforming shape when a press-formed article of a target shape is manufactured by press work including a preforming process of press-forming a metal sheet into the preforming shape and a main forming process of press-forming an intermediate part of the preforming shape into the target shape, including:
   a position identification process of identifying a crack occurrence position where a crack is presumed to occur in a formed press-formed article when the metal sheet is press-formed to the bottom dead center with a die capable of forming the metal sheet into the target shape by one press-forming;
   a first surface area calculation process of determining a surface area A1 positioned within a first region within a predetermined distance L0 from the crack occurrence position in the target shape;
   a basic shape setting process of setting a basic shape of the preforming shape based on the target shape;
   a second surface area calculation process of determining a surface area A2 positioned within a second region within the distance L0 from a position corresponding to the crack occurrence position in the basic shape; and
   a basic shape transformation process of transforming the shape of the basic shape to satisfy Equation (1) below. $0.9 \times A 1 < A 2 < 1.1 \times A 1$
(2) The basic shape setting process sets one forming shape selected from among a plurality of forming shapes which is a forming shape during the formation of the metal sheet to the bottom dead center with the die and before the crack occurs as the basic shape of the preforming shape.
(3) The position identification process identifies a position where the crack is presumed to occur by a forming analysis by a computer of press-forming the metal sheet into the target shape; and
   the basic shape setting process determines the forming shape before a crack occurs by the forming analysis by a computer of press-forming the metal sheet into the target shape.
(4) The basic shape setting process includes:
   partitioning a reference plane being a plane orthogonal to the press direction in the main forming process by the repetition of a plurality of single shapes formed of a polygonal shape by arranging the single shapes to be consecutively aligned with respect to the reference plane;
   dividing a surface of the target shape by dividing lines formed on the surface of the target shape by intersection of the sides of the single shapes arranged on the reference plane with the target shape when the partitioned reference plane is moved in the press direction toward the target shape;
   arranging three or more nodes at a distance from each other in each of the dividing lines corresponding to each side of each single shape;
   setting a plurality of curves connecting the plurality of nodes aligned along the extension direction of the dividing lines and being smooth; and
   setting a surface shape formed by smoothly patching a surface to each region enclosed by the set plurality of curves as the basic shape.
(5) The plurality of single shapes is arranged on the reference plane by partitioning the reference plane by lattice-like lines with the single shape as a quadrilateral shape.
(6) The interval between the dividing lines adjacent to each other is set to 1/10 or less of the line length of the target shape in the arrangement direction of the dividing lines adjacent to each other.
(7) The basic shape transformation process determines the shape at a position at a distance L from a position corresponding to the crack occurrence position in the basic shape for the surface shape within a crack occurrence region being a region within the distance L0 from the position corresponding to the crack occurrence position using a function P(q, L) represented by Equation (2) below. $P \left(q, L\right) = q \times f \left(L\right)$ Herein, f(L) is a function formula satisfying f(L0) = 0, f'(0) = 0, and f'(L0) = 0.
(8) The distance L0 is set to such a value that the entire region of the crack is included within the first region.
(9) When the tensile strength of a material of the metal sheet is set as TS (MPa), the distance L0 is set to a value satisfying Equation (3) below. $L 0 < 3 \times {TS}^{0.5}$
(10) When a crack reduction effect is not recognized in a case where the preforming process and the main forming process are carried out with the basic shape after transformed in the basic shape transformation process as the preforming shape, the preforming shape is designed by updating the basic shape after transformed in the basic shape transformation process to the basic shape, and repeatedly carrying out processing of the second surface area calculation process and processing of the basic shape transformation process until the crack reduction effect is recognized.
(11) A method for designing a preforming shape when a press-formed article of a target shape is manufactured by press work including a preforming process of press-forming a metal sheet into the preforming shape and a main forming process of press-forming an intermediate part of the preforming shape into the target shape, including:
   partitioning a reference plane being a plane orthogonal to the press direction by the repetition of a plurality of single shapes formed of a polygonal shape by arranging the single shapes to be consecutively aligned with respect to the reference plane;
   dividing a surface of the target shape by dividing lines formed on the surface of the target shape by intersection of the sides of the single shapes arranged on the reference plane with the target shape when the partitioned reference plane is moved in the press direction toward the target shape;
   arranging three or more nodes at a distance from each other in each of the dividing lines corresponding to each side of each single shape;
   setting a plurality of curves connecting the plurality of nodes aligned along the extension direction of the dividing lines and being smooth; and
   setting a surface shape formed by smoothly patching a surface to each region enclosed by the set plurality of curves as the preforming shape.
(12) The plurality of single shapes is arranged on the reference plane by partitioning the reference plane by lattice-like lines with the single shape as a quadrilateral shape.
(13) The interval between the dividing lines adjacent to each other is set to 1/10 or less of the line length of the target shape in the arrangement direction of the dividing lines adjacent to each other.
(14) A method for manufacturing a press-formed article including:
   determining the preforming shape by the method for designing a preforming shape of the present disclosure; and
   manufacturing the press-formed article of the target shape by the press work including the preforming process of press-forming the metal sheet into the preforming shape and the main forming process of press-forming an intermediate part of the preforming shape into the target shape.
(15) A program for causing a computer to execute design processing of determining a preforming shape when a press-formed article of a target shape is manufactured by press work including a preforming process of press-forming a metal sheet into the preforming shape and a main forming process of press-forming an intermediate part of the preforming shape into the target shape because a crack occurs in the press-formed article when the metal sheet is press-formed into the target shape by one press-forming, including:
   a position identification step of identifying a position where a crack occurs by performing a forming analysis to the forming bottom dead center under an analysis condition of press-forming the metal sheet into the target shape by one press-forming;
   a first surface area calculation step of determining a surface area A1 positioned within a first region within a set predetermined distance L0 from the crack occurrence position identified in the position identification step in the target shape;
   a basic shape setting step of temporarily setting a basic shape of the preforming shape based on the target shape;
   a second surface area calculation step of determining a surface area A2 positioned within a second region within the distance L0 from a position corresponding to the crack occurrence position identified in the position identification step in the basic shape; and
   a basic shape transformation step of transforming the basic shape such that the shape within the second region in the basic shape satisfies 0.9 × A1 < A2 < 1.1 × A1.
(16) The basic shape setting step sets one forming shape among a plurality of forming shapes being a forming shape during the formation to the bottom dead center and before the crack occurs determined by the same forming analysis as the forming analysis of the position identification step as the basic shape.
(17) The basic shape setting step includes:
   partitioning a reference plane being a plane orthogonal to the press direction by the repetition of a plurality of single shapes formed of a polygonal shape by arranging the single shapes to be consecutively aligned with respect the reference plane;
   determining a plurality of dividing lines formed on a surface of the target shape by intersection of the sides of the single shapes arranged on the reference plane with the target shape when the partitioned reference plane is moved in the press direction toward the target shape;
   arranging three or more nodes at equal intervals as viewed from the press direction in each of the dividing lines corresponding to each side of each single shape,
   setting a plurality of curves connecting the plurality of nodes aligned along the extension direction of the dividing lines and being smooth; and
   setting a surface shape formed by smoothly patching a surface to each region enclosed by the set plurality of curves as the basic shape.
(18) The plurality of single shapes is arranged on the reference plane by partitioning the reference plane by lattice-like lines with the single shape as a quadrilateral shape.
(19) The basic shape transformation step
   determines the preforming shape at a position at a distance L from a position corresponding to the crack occurrence position for the surface shape within a crack occurrence region being a second region within the distance L0 from the position corresponding to the crack occurrence position in the basic shape using P(q, L) represented by Equation below. $P \left(q, L\right) = q \times f \left(L\right)$
   Herein, f(L) is a function formula satisfying f(L0) = 0, f'(0) = 0, and f'(L0) = 0.
(20) When the tensile strength of a material of the metal sheet is set as TS (MPa), the distance L0 is set to a value satisfying Equation below. $L 0 < 3 \times {TS}^{0.5}$
(21) When it has been determined that a crack reduction effect is not recognized in a case where the preforming process and the main forming process are carried out with the basic shape after transformation determined in the basic shape transformation step as the preforming shape, the basic shape after transformation determined in the basic shape transformation step is updated to the preforming shape, and the processing of the second surface area calculation step and the processing of the basic shape transformation step are repeatedly carried out until the crack reduction effect is recognized.
(22) A program for causing a computer to execute design processing of determining a preforming shape when a press-formed article of a target shape is manufactured by press work including a preforming process of press-forming a metal sheet into the preforming shape and a main forming process of press-forming an intermediate part of the preforming shape into the target shape because a crack occurs in the press-formed article when the metal sheet is press-formed into the target shape by one press-forming, including:
   partitioning a reference plane being a plane orthogonal to the press direction by the repetition of a plurality of single shapes formed of a polygonal shape by arranging the single shapes to be consecutively aligned with respect to the reference plane;
   determining a plurality of dividing lines formed on a surface of the target shape by intersection of the sides of the single shapes arranged on the reference plane with the target shape when the partitioned reference plane is moved in the press direction toward the target shape;
   arranging three or more nodes at equal intervals as viewed from the press direction in each of the dividing lines corresponding to each side of each single shape;
   setting a plurality of curves connecting the plurality of nodes aligned along the extension direction of the dividing lines and being smooth; and
   setting a surface shape formed by smoothly patching a surface to each region enclosed by the set plurality of curves as the preforming shape.
(23) The plurality of single shapes is arranged on the reference plane by partitioning the reference plane by lattice-like lines with the single shape as a quadrilateral shape, and the plurality of single shapes is arranged on the reference plane.

### EXAMPLES

### [First example]

A first example describes an example based on the first shape setting process in the first embodiment described above.

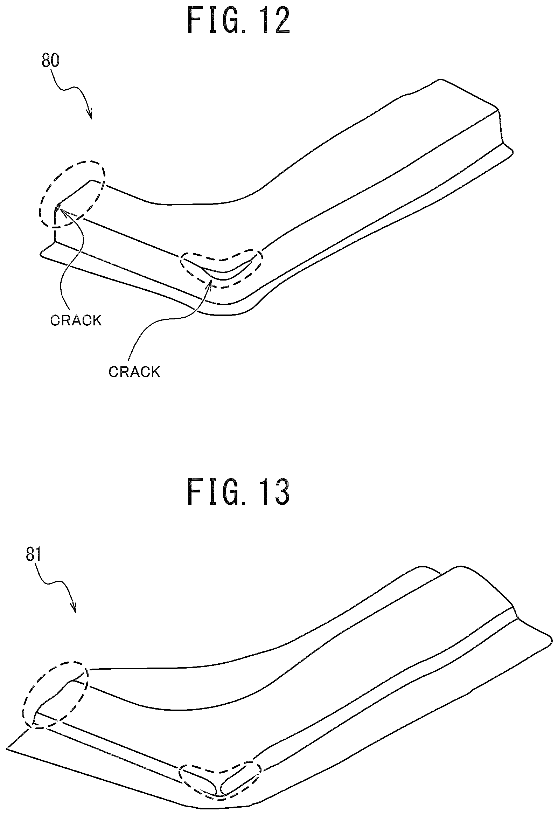

This example is an example in which a shape simulating a front pillar lower of an automobile illustrated in FIG. 12 is set as the target shape. As the metal sheet, a 1180 MPa-grade hot-dip galvanized material (1.2 mm sheet thickness) was used.

At this time, when the target shape is to be formed by one press-forming, cracks occurred at the positions illustrated in FIG. 12.

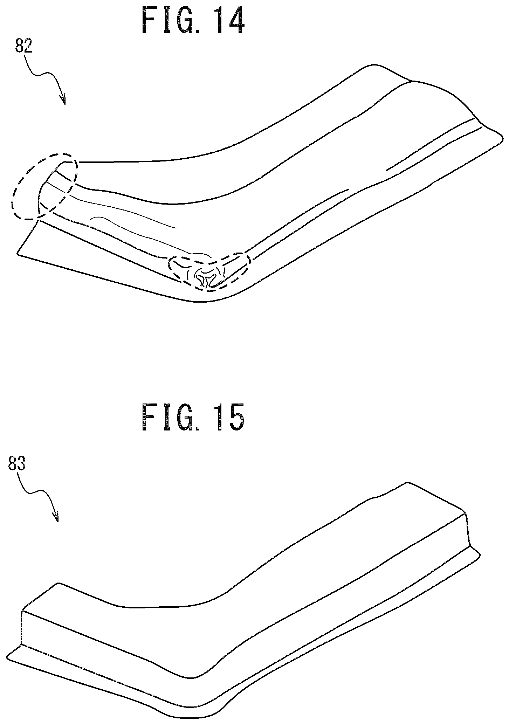

Thus, based on the first embodiment employing the first shape setting process, a basic shape 81 serving as the basis for the preforming shape was set as illustrated in FIG.13. Then, the shapes near the crack occurrence positions W in the basic shape 81 were changed as illustrated in FIG. 14. Portions enclosed by the boxes are shape design portions. This processing was repeated until the cracks were resolved with the basic shape after change as the new basic shape 81, and processing of changing the shapes near the cracks was carried out. In this example, the number of repetitions was four. The forming result of the final target shape is illustrated in FIG. 15.

Thus, it has been found that, by employing the design of the preforming shape based on the present invention, a formed article of a good target shape in which no cracks occur can be obtained. Thus, the use of the present invention makes it possible to more simply design a preforming shape.

### [Second example]

A second example descries an example based on the second shape setting process in the first embodiment described above.

In this example, the design of a preforming shape was carried out under the same conditions as those of the first example, except that a method for setting the basic shape 81 was set to the second shape setting process.

In this case, a preforming shape in which the cracks are resolved was able to be determined with the number of repetitions of three.

Thus, it has been found that, by employing the design of the preforming shape based on the present invention, a formed article of a good target shape in which no cracks occur can be obtained. Thus, the use of the present invention makes it possible to more simply design a preforming shape.

Herein, the entire contents of JP 2023-197994 A (filed November 22, 2023), for which this application claims priority, form part of the present disclosure by reference. Herein, the description is given with reference to a limited number of embodiments, but the scope of the invention is not limited thereto and modifications of each embodiment based on the disclosure above are obvious to those skilled in the art.

### Reference Signs List

1: preforming shape design process
2: press work
2A: preforming process
2B: main forming process
10: intermediate part
11: press-formed article
20: position identification process
21: first surface area calculation process
22: basic shape setting process
23: second surface area calculation process
24: basic shape transformation process
25: shape evaluation process
26: basic shape resetting process
30: basic shape
40: reference plane
40A: single shape
41: target shape
42: dividing line
43: curve
44: region enclosed by curves
45: node
50: program
50A: position identification step
50B: first surface area calculation step
50C: basic shape setting step
50D: second surface area calculation step
50E: basic shape transformation step
50F: shape evaluation step
60: preforming shape setting process
61: shape evaluation process
70: program
70F: shape evaluation step
A1: surface area
A2: surface area
W: occurrence position

## Claims

1. A method for designing a preforming shape when a press-formed article of a target shape is manufactured by press work including a preforming process of press-forming a metal sheet into the preforming shape and a main forming process of press-forming an intermediate part of the preforming shape into the target shape, comprising:
a position identification process of identifying a crack occurrence position where a crack is presumed to occur in a formed press-formed article when the metal sheet is press-formed to a bottom dead center with a die capable of forming the metal sheet into the target shape by one press-forming;
a first surface area calculation process of determining a surface area A1 positioned within a first region within a predetermined distance L0 from the crack occurrence position in the target shape;
a basic shape setting process of setting a basic shape of the preforming shape based on the target shape;
a second surface area calculation process of determining a surface area A2 positioned within a second region within the distance L0 from a position corresponding to the crack occurrence position in the basic shape; and
a basic shape transformation process of transforming a shape of the basic shape to satisfy Equation (1) below, $0.9 \times A 1 < A 2 < 1.1 \times A 1$

2. The method for designing a preforming shape according to claim 1, wherein
the basic shape setting process sets one forming shape selected from among a plurality of forming shapes being a forming shape during the formation of the metal sheet to the bottom dead center with the die and before the crack occurs as the basic shape of the preforming shape.

3. The method for designing a preforming shape according to claim 1 or 2, wherein
the position identification process identifies a position where the crack is presumed to occur by a forming analysis by a computer of press-forming the metal sheet into the target shape; and
the basic shape setting process determines the forming shape before a crack occurs by the forming analysis by a computer of press-forming the metal sheet into the target shape.

4. The method for designing a preforming shape according to any one of claims 1 to 3, wherein
the basic shape setting process includes:
partitioning a reference plane being a plane orthogonal to a press direction in the main forming process by repetition of a plurality of single shapes formed of a polygonal shape by arranging the single shapes to be consecutively aligned with respect to the reference plane;
dividing a surface of the target shape by dividing lines formed on the surface of the target shape by intersection of sides of the single shapes arranged on the reference plane with the target shape when the partitioned reference plane is moved in the press direction toward the target shape;
arranging three or more nodes at a distance from each other in each of the dividing lines corresponding to each side of each single shape;
setting a plurality of curves connecting the plurality of nodes aligned along an extension direction of the dividing lines and being smooth; and
setting a surface shape formed by smoothly patching a surface to each region enclosed by the set plurality of curves as the basic shape.

5. The method for designing a preforming shape according to claim 4, wherein
the plurality of single shapes is arranged on the reference plane by partitioning the reference plane by lattice-like lines with the single shape as a quadrilateral shape.

6. The method for designing a preforming shape according to claim 4 or 5, wherein
an interval between the dividing lines adjacent to each other is set to 1/10 or less of a line length of the target shape in an arrangement direction of the dividing lines adjacent to each other.

7. The method for designing a preforming shape according to any one of claim 1 to 6, wherein the basic shape transformation process
determines a shape at a position at a distance L from a position corresponding to the crack occurrence position for a surface shape within a crack occurrence region being a region within the distance L0 from the position corresponding to the crack occurrence position in the basic shape using a function P(q, L) represented by Equation (2) below, $P \left(q, L\right) = q \times f \left(L\right)$
wherein, f(L) is a function formula satisfying f(L0) = 0, f'(0) = 0, and f'(L0) = 0.

8. The method for designing a preforming shape according to any one of claim 1 to 7, wherein
the distance L0 is set to such a value that an entire region of the crack is included within the first region.

9. The method for designing a preforming shape according to any one of claim 1 to 8, wherein
when tensile strength of a material of the metal sheet is set as TS (MPa), the distance L0 is set to a value satisfying Equation (3) below, $L 0 < 3 \times {TS}^{0.5}$

10. The method for designing a preforming shape according to any one of claim 1 to 9, wherein
when a crack reduction effect is not recognized in a case where the preforming process and the main forming process are carried out with the basic shape after transformed in the basic shape transformation process as the preforming shape, the preforming shape is designed by updating the basic shape after transformed in the basic shape transformation process to the basic shape, and repeatedly carrying out processing of the second surface area calculation process and processing of the basic shape transformation process until the crack reduction effect is recognized.

11. A method for designing a preforming shape when a press-formed article of a target shape is manufactured by press work including a preforming process of press-forming a metal sheet into the preforming shape and a main forming process of press-forming an intermediate part of the preforming shape into the target shape, comprising:
partitioning a reference plane being a plane orthogonal to a press direction by repetition of a plurality of single shapes formed of a polygonal shape by arranging the single shapes to be consecutively aligned with respect to the reference plane;
dividing a surface of the target shape by dividing lines formed on the surface of the target shape by intersection of sides of the single shapes arranged on the reference plane with the target shape when the partitioned reference plane is moved in the press direction toward the target shape;
arranging three or more nodes at a distance from each other in each of the dividing lines corresponding to each side of each single shape;
setting a plurality of curves connecting the plurality of nodes aligned along an extension direction of the dividing lines and being smooth; and
setting a surface shape formed by smoothly patching a surface to each region enclosed by the set plurality of curves as the preforming shape.

12. The method for designing a preforming shape according to claim 11, wherein
the plurality of single shapes is arranged on the reference plane by partitioning the reference plane by lattice-like lines with the single shape as a quadrilateral shape.

13. The method for designing a preforming shape according to claim 11, wherein
an interval between the dividing lines adjacent to each other is set to 1/10 or less of a line length of the target shape in an arrangement direction of the dividing lines adjacent to each other.

14. A method for manufacturing a press-formed article comprising:
determining the preforming shape by the method for designing a preforming shape according to any one of claims 1 to 13; and
manufacturing the press-formed article of the target shape by the press work including the preforming process of press-forming the metal sheet into the preforming shape and the main forming process of press-forming the intermediate part of the preforming shape into the target shape.

15. A program for causing a computer to execute design processing of determining a preforming shape when a press-formed article of a target shape is manufactured by press work including a preforming process of press-forming a metal sheet into the preforming shape and a main forming process of press-forming an intermediate part of the preforming shape into the target shape because a crack occurs in the press-formed article when the metal sheet is press-formed into the target shape by one press-forming, comprising:
a position identification step of identifying a position where a crack occurs by performing a forming analysis to a forming bottom dead center under an analysis condition of press-forming the metal sheet into the target shape by one press-forming;
a first surface area calculation step of determining a surface area A1 positioned within a first region within a set predetermined distance L0 from a crack occurrence position identified in the position identification step in the target shape;
a basic shape setting step of temporarily setting a basic shape of the preforming shape based on the target shape;
a second surface area calculation step of determining a surface area A2 positioned within a second region within the distance L0 from a position corresponding to the crack occurrence position identified in the position identification step in the basic shape; and
a basic shape transformation step of transforming the basic shape such that a shape within the second region in the basic shape satisfies 0.9 × A1 < A2 < 1.1 × A1.

16. The program according to claim 15, wherein
the basic shape setting step sets one forming shape among a plurality of forming shapes being a forming shape during the formation to the bottom dead center and before the crack occurs as the basic shape determined by a forming analysis same as the forming analysis of the position identification step.

17. The program according to claim 15 or 16,
wherein
the basic shape setting step comprises:
partitioning a reference plane being a plane orthogonal to a press direction by repetition of a plurality of single shapes formed of a polygonal shape by arranging the single shapes to be consecutively aligned with respect the reference plane;
determining a plurality of dividing lines formed on a surface of the target shape by intersection of sides of the single shapes arranged on the reference plane with the target shape when the partitioned reference plane is moved in the press direction toward the target shape;
arranging three or more nodes at equal intervals as viewed from the press direction in each of the dividing lines corresponding to each side of each single shape;
setting a plurality of curves connecting the plurality of nodes aligned along an extension direction of the dividing lines and being smooth; and
setting a surface shape formed by smoothly patching a surface to each region enclosed by the set plurality of curves as the basic shape.

18. The program according to claim 17, wherein
the plurality of single shapes is arranged on the reference plane by partitioning the reference plane by lattice-like lines with the single shape as a quadrilateral shape.

19. The program according to any one of claims 15 to 18, wherein
the basic shape transformation step
determines the preforming shape at a position at a distance L from a position corresponding to the crack occurrence position for a surface shape within a crack occurrence region being a second region within the distance L0 from the position corresponding to the crack occurrence position in the basic shape using P(q, L) represented by Equation below, $P \left(q, L\right) = q \times f \left(L\right)$
wherein f(L) is a function formula satisfying f(L0) = 0, f'(0) = 0, and f'(L0) = 0.

20. The program according to any one of claims 15 to 19, wherein
when tensile strength of a material of the metal sheet is set as TS (MPa), the distance L0 is set to a value satisfying Equation below, $L 0 < 3 \times {TS}^{0.5} .$

21. The program according to any one of claims 15 to 20, wherein
when it has been determined that a crack reduction effect is not recognized in a case where the preforming process and the main forming process are carried out with the basic shape after transformation determined in the basic shape transformation step as the preforming shape, the basic shape after transformation determined in the basic shape transformation step is updated to the preforming shape, and processing of the second surface area calculation step and processing of the basic shape transformation step are repeatedly carried out until the crack reduction effect is recognized.

22. A program for causing a computer to execute design processing of determining a preforming shape when a press-formed article of a target shape is manufactured by press work including a preforming process of press-forming a metal sheet into the preforming shape and a main forming process of press-forming an intermediate part of the preforming shape into the target shape because a crack occurs in the press-formed article when the metal sheet is press-formed into the target shape by one press-forming, comprising:
partitioning a reference plane being a plane orthogonal to a press direction by repetition of a plurality of single shapes formed of a polygonal shape by arranging the single shapes to be consecutively aligned with respect to the reference plane;
determining a plurality of dividing lines formed on a surface of the target shape by intersection of sides of the single shapes arranged on the reference plane with the target shape when the partitioned reference plane is moved in a press direction toward the target shape;
arranging three or more nodes at equal intervals as viewed from the press direction in each of the dividing lines corresponding to each side of each single shape;
setting a plurality of curves connecting the plurality of nodes aligned along an extension direction of the dividing lines and being smooth; and
setting a surface shape formed by smoothly patching a surface to each region enclosed by the set plurality of curves as the preforming shape.

23. The program according to claim 22, wherein
the plurality of single shapes is arranged on the reference plane by partitioning the reference plane by lattice-like lines with the single shape as a quadrilateral shape, and the plurality of single shapes is arranged on the reference plane.
